# EUROPÄISCHE PATENTSCHRIFT

(11) **EP 3 263 396 B1**
(45) Veröffentlichungstag und Bekanntmachung des Hinweises auf die Patenterteilung: **08.04.2020**
(21) Anmeldenummer: 17175404.7
(22) Anmeldetag: 12.06.2017
(51) Int. Cl.: B60N 2/50, B60N 2/54, B60N 2/02

(54) **FEDERUNGSVORRICHTUNG**
SUSPENSION DEVICE
SYSTÈME DE SUSPENSION

(30) Priorität: 01.07.2016 DE 102016112119
(43) Veröffentlichungstag der Anmeldung: 03.01.2018
(73) Patentinhaber: GRAMMER AG, 92224 Amberg (DE)
(72) Erfinder: Schanderl, Florian, 92521 Schwarzenfeld (DE); Lorey, Konstantin, 92546 Schmidgaden (DE)
(74) Vertreter: Hannke, Christian

(56) Entgegenhaltungen:
- EP-A1- 3 178 691
- WO-A1-91/04881
- JP-U- S6 024 634

## Beschreibung

Die Erfindung betrifft eine Federungsvorrichtung für einen Fahrzeugsitz, umfassend ein Federungsoberteil und ein Federungsunterteil, welche durch eine erste Verbindungsschwinge und eine zweite Verbindungsschwinge miteinander verbunden sind und die erste Verbindungsschwinge schwenkbar um eine erste Schwenkachse und die zweite Verbindungsschwinge schwenkbar um eine zweite Schwenkachse an dem Federungsunterteil angeordnet sind, wobei eine erste Zugfeder und eine zweite Zugfeder jeweils mit einem ersten Endbereich mit der ersten Verbindungsschwinge und mit einem zweiten Endbereich mit dem Federungsoberteil oder dem Federungsunterteil verbunden ist.

Es sind aus dem Stand der Technik derartige Federungsvorrichtungen für Fahrzeugsitze bekannt, wobei das Federungsoberteil, das Federungsunterteil und die Verbindungsschwinge als ein Parallelogramm angeordnet sind, wobei der erste Endbereich der Federeinheit direkt an der ersten Verbindungsschwinge angeordnet ist. Ein Beispiel ist in Dokument WO91/04881 zu finden.

Dabei ist es nicht unerheblich für die Federeigenschaften der Federungsvorrichtungen, ob sich eine Person mit einer geringen Masse oder eine Person mit einer hohen Masse auf dem Fahrzeugsitz niederlässt. Entsprechend muss hierbei die Federungsvorspannung verändert werden, so dass die Federeigenschaften entsprechend dem Gewicht der Person eingestellt werden können. Insbesondere ist es hier wichtig, dass nach der Einfederung des Fahrzeugsitzes die Federungsvorrichtung den Fahrzeugsitz in seine Ausgangslage zurückbringen kann. Im Stand der Technik wird hierzu eben nur die Federvorspannung zum Rückstellen der Federungsvorrichtung bzw. des Fahrzeugsitzes herangezogen.

Es ist demzufolge Aufgabe der vorliegenden Erfindung, eine Federungsvorrichtung bereitzustellen, mittels welcher auf eine besonders einfache und schnelle Einstellung der Federungsvorrichtung vorgenommen werden kann.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, Federungsvorrichtung für einen Fahrzeugsitz, umfassend ein Federungsoberteil und ein Federungsunterteil, welche durch eine erste Verbindungsschwinge und eine zweite Verbindungsschwinge miteinander verbunden sind und die erste Verbindungsschwinge schwenkbar um eine erste Schwenkachse und die zweite Verbindungsschwinge schwenkbar um eine zweite Schwenkachse an dem Federungsunterteil angeordnet sind, wobei eine erste Zugfeder und eine zweite Zugfeder jeweils mit einem ersten Endbereich mit der ersten Verbindungsschwinge und mit einem zweiten Endbereich mit dem Federungsoberteil oder dem Federungsunterteil verbunden ist, wobei der erste Endbereich der ersten Zugfeder in einem ersten Abstand und der erste Endbereich der zweiten Zugfeder in einem zweiten Abstand zu der ersten Verbindungsschwinge daran befestigt sind, wobei der erste Abstand in seiner Länge veränderbar ist.

Gemäß einer bevorzugen Ausführungsform ist die erste Verbindungsschwinge um eine dritte Schwenkachse und die zweite Verbindungsschwinge um eine vierte Schwenkachse schwenkbar mit dem Federungsoberteil verbunden.

Durch eine derartige Anordnung werden Drehmomente erzeugt, welche für eine Rückstellung des eingefederten Fahrzeugsitzes in seine Ausgangslage bzw. Grundstellung bzw. Grundposition genutzt werden können. Die entstehenden Drehmomente werden im Folgenden genauer dargestellt.

Dadurch, dass die erste und die zweite Zugfeder jeweils mit seinem ersten Endbereich mit der ersten Verbindungsschwinge in einem Abstand, die erste Zugfeder mit dem ersten Abstand und die zweite Zugfeder mit dem zweiten Abstand, und jeweils mit seinem zweiten Endbereich mit dem Federungsoberteil oder dem Federungsunterteil verbunden ist, bildet sich jeweils ein Hebelarm, ein erster Hebelarm für die erste Zugfeder und ein zweiter Hebelarm für die zweite Zugfeder, dessen Anordnung davon abhängig ist, ob die Federeinheit mittels des zweiten Endbereichs mit dem Federungsoberteil oder dem Federungsunterteil verbunden ist. Ist der zweite Endbereich der Zugfedern mit dem Federungsoberteil verbunden, so ist der Hebelarm zwischen der dritten Schwenkachse und dem ersten Endbereich ausgebildet. Ist hingegen der zweite Endbereich der Federeinheit mit dem Federungsunterteil verbunden, so ist der Hebelarm zwischen der ersten Schwenkachse und dem ersten Endbereich ausgebildet.

Im nachfolgenden ist von einer Verbindung des zweiten Endbereichs mit dem Federungsoberteil auszugehen, falls nicht anders angegeben. Bei einer Verbindung des zweiten Endbereichs mit dem Federungsunterteil ergeben sich die Zusammenhänge entsprechend. Dadurch, dass durch die Anordnung des ersten Endbereichs der Zugfedern in dem entsprechenden Abstand mit der ersten Verbindungsschwinge der Hebelarm ausgebildet ist, welcher sich von dem ersten Endbereich der Federeinheit zu dem dritten Schwenkpunkt erstreckt, wird bei einer Krafteinleitung von außen die Federeinheit verspannt, so dass durch die Federeinheit eine Kraft auf den Hebelarm wirkt, wodurch ein Drehmoment entsteht, welches der Richtung der äußeren Krafteinleitung entgegenwirkt, indem die erste Verbindungsschwinge um den ersten Schwenkpunkt verschwenkt wird.

Die hieraus resultierende Kraft erzeugt über einen theoretischen Hebelarm in dem zweiten Schwenkpunkt ein Drehmoment, wobei der theoretische Hebelarm sich von der zweiten Schwenkachse senkrecht zum Federungsoberteil erstreckt.

Durch das erzeugte Drehmoment durch den theoretischen Hebelarm und der Verlängerung dieses theoretischen Hebelarms durch die besondere Anordnung der ersten Schwenkachse zu der zweiten Schwenkachse ist dieses Drehmoment ausreichend für die Rückstellung der Federungsvorrichtung bzw. des Fahrzeugsitzes in seine Ausgangslage. Das durch den theoretischen Hebelarm erzeugte Drehmoment wird hierbei im Folgenden nicht näher betrachtet.

Der zweite Abstand des ersten Endbereichs der zweiten Zugfeder zu der ersten Verbindungsschwinge ist konstant. Dies bedeutet daher, dass die zweite Zugfeder für die Federungsvorrichtung ein gewisses Mindestdrehmoment erzeugt, das für die Rückstellung der Federungsvorrichtung verwendet wird.

Dadurch, dass der erste Abstand veränderbar ist, ist auch der erste Hebelarm veränderbar, so dass mittels der ersten Zugfeder das gesamte Drehmoment, erzeugt durch das erste Drehmoment der ersten Zugfeder und dem zweiten Drehmoment der zweiten Zugfeder, einstellbar ist. Nimmt ein leichter Fahrer auf dem Fahrzeugsitz Platz, so kann das gesamte Drehmoment kleiner gewählt werden, so dass der Hebelarm kürzer ausgebildet sein kann. Nimmt jedoch ein schwerer Fahrer auf dem Fahrzeugsitz Platz, so wird mehr Drehmoment benötigt, um die Federungsvorrichtung rückzustellen. Der erste Hebelarm ist daher länger zu wählen.

Der erste Abstand des ersten Endbereichs der ersten Zugfeder zu der ersten Verbindungsschwinge ist mittels einer Einstellvorrichtung, welche mit der ersten Verbindungsschwinge einerseits und mit dem ersten Endbereich andererseits verbunden ist, einstellbar.

Insbesondere kann durch die Einstellung des ersten Abstandes auch der Hebelarm verändert werden, wodurch die Ausschubkraft bzw. die Federrate der ersten Zugfeder veränderbar ist.

Gemäß einer weiteren bevorzugten Ausführungsform sind eine Länge von der ersten Schwenkachse zu der dritten Schwenkachse und eine Länge von der zweiten Schwenkachse zu der vierten Schwenkachse identisch oder unterschiedlich.

Gemäß einer weiteren bevorzugten Ausführungsform sind eine Länge von der ersten Schwenkachse zu der zweiten Schwenkachse und eine Länge von der dritten Schwenkachse zu der vierten Schwenkachse identisch.

Besonders vorteilhaft umfasst das Federungsoberteil einen Fahrzeugsitz, insbesondere einen Fahrzeugsitz mit einem Sitzteil und einer Rückenlehne.

Gemäß einer bevorzugten Ausführungsform umfasst die Federungsvorrichtung mehr als zwei Zugfedern, also zusätzlich zu der ersten und zweiten Zugfeder noch eine dritte, eine vierte, usw. Zugfeder, so dass die Bauhöhe der Federungsvorrichtung hierdurch noch weiter reduziert werden kann, da eine auf die Federungsvorrichtung eingeleitete Kraft von zwei oder mehr Federn aufgenommen werden kann. Die Federn können also hierdurch kleiner dimensioniert werden. Besonders vorteilhaft ist es, zwei Federn für die Federungsvorrichtung vorzusehen. Es können aber auch eine beliebige Anzahl von Federn, insbesondere drei oder mehr, vorgesehen sein.

Der erste und der zweite Endbereich der Zugfedern sind hierbei vorzugsweise das erste und das zweite Ende der Feder, wobei besonders bevorzugt das erste und/oder das zweite Ende der Feder eine Öse oder dergleichen aufweisen, so dass die Zugfeder leicht mit dazu vorgesehene Öffnungen oder Vorrichtungen verbunden, insbesondere eingehängt bzw. aufgehängt werden können.

Mittels einer Einstellung des ersten Abstandes des ersten Endbereichs der ersten Zugfeder und nicht mittels einer Veränderung der Federspannung der Federeinheit werden die Federrate und die Ausschubkraft der Federungsvorrichtung, also insbesondere der Zugfeder, geändert.

Eine Einstellung ist hierbei gleichbedeutend mit einer Lageänderung der Federeinheit oder der Federeinheiten im Raum. Durch die Lageänderung der Federeinheit bzw. der Feder der Federeinheit wird der an der Federeinheit angreifende Hebelarm in seiner Länge verändert.

Insbesondere wird dadurch der erste Endbereich relativ zu dem Federungsunterteil, welches vorzugsweise starr mit einem Boden, einer Karosserie oder dergleichen verbindbar ist, oder dem Federungsoberteil eingestellt. Der an der ersten Zugfeder angreifende Hebel erstreckt sich dabei von der ersten Verbindungsschwinge, genauer der dritten Schwenkachse, bis zu dem ersten Endbereich der Federeinheit. Durch Verstellung bzw. Verschieben des ersten Endbereichs der ersten Zugfeder ist die Länge des Hebels veränderbar, so dass hierdurch die Federrate und die Ausschubkraft der Federungsvorrichtung veränderbar sind. Der erste Endbereich umfasst also entsprechend den Krafteinleitungspunkt der ersten Zugfeder.

Die Ausschubkraft wird, wie bereits kurz angegeben, aufgrund des folgenden Zusammenhangs verändert. Wie bekannt ist, ist ein Drehmoment proportional zu der Länge eines Hebels, wenn die angreifende Kraft konstant ist. Durch Verstellung der Position des ersten Endbereichs wird die Länge des ersten Hebelarms verändert. Sitzt ein verhältnismäßig schwerer Fahrer auf dem Fahrzeugsitz, der über die erfindungsgemäße Federungsvorrichtung verfügt, so muss der Hebel entsprechend länger sein als bei einem leichten Fahrer. Dadurch, dass erfindungsgemäß nicht die Federspannung zur Veränderung der Ausschubkraft verändert wird, sondern nur die Lage der Federeinheit verändert wird, ist lediglich eine geringe Kraft seitens eines Benutzers notwendig, um die Ausschubkraft der Federungsvorrichtung zu verändern. Hierdurch wird auch eine sehr schnelle Verstellung der Ausschubkraft ermöglicht.

Der erste Abstand kann besonders leicht eingestellt werden, wenn die Einstellvorrichtung ein erstes und ein zweites Trägerelement, welche starr mit der ersten Verbindungsschwinge verbunden sind, und vorzugsweise ein um eine erste

Drehachse drehbares Spindelelement, welches mit einem ersten Spindellager und einem zweiten Spindellager verbunden ist, umfasst, wobei das erste Spindellager ortsfest mit dem ersten und dem zweiten Trägerelement und das zweite Spindellager mit einem um eine zweite Drehachse drehbares Einstellelement verbunden sind, wobei die zweite Drehachse an dem ersten und dem zweiten Trägerelement drehbar gelagert ist und wobei der erste Endbereich der ersten Zugfeder mit dem Einstellelement und der erste Endbereich der zweiten Zugfeder mit dem ersten Trägerelement verbunden sind.

Hierdurch wird eine konstruktiv einfache Möglichkeit dargestellt, den ersten Abstand bzw. entsprechend den ersten Hebelarm leicht einzustellen.

Gemäß einer weiteren bevorzugten Ausführungsform ist die Einstellvorrichtung mittels eines Betätigungselements, welches mit dem Spindelelement verbunden ist, durch Drehung des Betätigungselements um die erste Drehachse betätigbar, wodurch das Einstellelement um die zweite Drehachse drehbar ist.

Alternativ hierzu ist es auch denkbar, dass das Spindelelement durch einen Motor, insbesondere einen Elektromotor betätigbar ist, um das Einstellelement um die zweite Drehachse zu drehen und somit den ersten Abstand zu verändern.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: perspektivische Ansicht eines Fahrzeugsitzes mit einer Federungsvorrichtung gemäß einer bevorzugten Ausführungsform;
- Fig. 2: schematische Darstellung des Funktionsprinzips der Federungsvorrichtung;
- Fig. 3A: Vorderansicht des Fahrzeugsitzes gemäß Fig. 1;
- Fig. 3B: Schnitt entlang der Ebene A-A des Fahrzeugsitzes gemäß Fig. 3A;
- Fig. 3C: Schnitt entlang der Ebene B-B des Fahrzeugsitzes gemäß Fig. 3A;
- Fig. 4A: perspektivische Ansicht der Einstellvorrichtung für einen schweren Fahrer;
- Fig. 4B: weitere perspektivische Ansicht der Einstellvorrichtung für einen schweren Fahrer;
- Fig. 4C: perspektivische Ansicht der Einstellvorrichtung für einen leichten Fahrer;
- Fig. 4D: weitere perspektivische Ansicht der Einstellvorrichtung für einen leichten Fahrer;
- Fig. 5A: Seitenansicht des Fahrzeugsitzes in einer oberen Endlage für einen schweren Fahrer;
- Fig. 5B: Seitenansicht des Fahrzeugsitzes in einer unteren Endlage für einen schweren Fahrer;
- Fig. 5C: Seitenansicht des Fahrzeugsitzes in einer oberen Endlage für einen leichten Fahrer;
- Fig. 5D: Seitenansicht des Fahrzeugsitzes in einer unteren Endlage für einen leichten Fahrer;

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

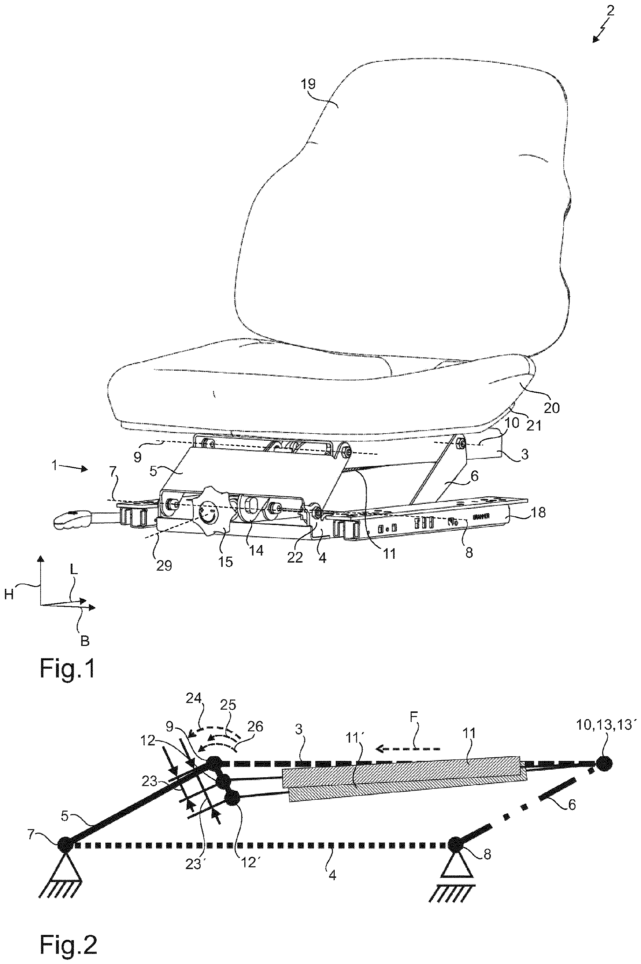

In der Figur 1 ist eine Federungsvorrichtung 1 für einen Fahrzeugsitz 2 gemäß einer bevorzugten Ausführungsform gezeigt. Die Federungsvorrichtung 1 ist hierbei zwischen einem Federungsoberteil 3 und einem Federungsunterteil 4 angeordnet, wobei das Federungsoberteil 3 eine Rückenlehne 19, eine Sitzfläche 20 und eine Sitzschale 21 aufweist. Das Federungsunterteil 4 ist hierbei mit einer Längsverstelleinrichtung 18 verbunden, so dass der insgesamte Fahrzeugsitz 2 in einer Längsrichtung L verschiebbar ist.

Wie weiter zu erkennen ist, sind das Federungsoberteil 3 und das Federungsunterteil 4 mittels einer ersten 5 und einer zweiten Verbindungsschwinge 6 miteinander verbunden, wobei die erste Verbindungsschwinge 5 um eine erste Schwenkachse 7 mit dem Federungsunterteil 4 und um eine dritte Schwenkachse 9 mit dem Federungsoberteil 3 schwenkbar verbunden ist. Die zweite Verbindungsschwinge 6 ist um eine zweite Schwenkachse 8 mit dem Federungsunterteil 4 und um eine vierte Schwenkachse 10 mit dem Federungsoberteil 3 schwenkbar verbunden.

Darüber hinaus ist vorzugsweise die erste Schwenkachse 7 in Höhenrichtung H gesehen oberhalb der zweiten Schwenkachse 8 angeordnet. Durch einen sich nach erstreckenden Anteil 22, mit welchem die erste Verbindungsschwinge 5 durch die erste Schwenkachse 7 verbunden ist, wird dieser Höhenunterschied erreicht.

Weiter ist die erste 11 und die zweite Zugfeder 11' mittels einer Einstellvorrichtung 14 mit der ersten Verbindungsschwinge 5 verbunden, so dass der erste Endbereich 12 der ersten Zugfeder 11 in einem ersten Abstand 16 und der erste Endbereich 12' der zweiten Zugfeder 11' in einem zweiten Abstand 17 dazu angeordnet ist. Dies wird in den nachstehenden Bildern noch einmal deutlicher dargestellt.

Die Einstellvorrichtung 14 ist vorliegend manuell mechanisch betätigbar mittels eines Betätigungselements 15, welches drehbar um eine Drehachse 27 gelagert ist und mittels der Drehung D des Betätigungselements 15 der erste Abstand 16 veränderbar bzw. einstellbar ist, wodurch die Ausschubkraft bzw. die Federrate der ersten Zugfeder 11 veränderbar ist.

In der Figur 2 wird das Funktionsprinzip der vorliegenden Erfindung schematisch dargestellt und erklärt.

Vorliegend sind die ersten Endbereiche 12, 12' der Zugfedern 11, 11' in einem Abstand zu der ersten Verbindungsschwinge 5 mit der ersten Verbindungsschwinge 5 verbunden, wobei sich der erste 16 und der zweite Abstand 17 hierbei von der dritten Schwenkachse aus zu dem jeweiligen ersten Endbereich 11, 11' erstrecken und jeweils einen Hebelarm darstellen, insbesondere für die erste Zugfeder 11 einen ersten Hebelarm 23 und für die zweite Zugfeder 11' einen zweiten Hebelarm 23'.

Durch die von den Zugfedern 11, 11' wirkende Kraft wird ein Drehmoment 24 erzeugt, wobei mittels des ersten Hebelarms 23 und der Kraft der ersten Zugfeder 11 ein erstes Drehmoment 25 und mittels des zweiten Hebelarms 23' und der Kraft der zweiten Zugfeder 11' ein zweites Drehmoment 26 erzeugt wird.

Gemäß der vorliegenden Ausführungsform ist hierbei der zweite Hebelarm 23' in seiner Länge konstant, das heißt dass der zweite Abstand 17, welcher dem zweiten Hebelarm 23' entspricht, konstant ist und wobei die Länge des zweiten Abstandes 17 bzw. des zweiten Hebelarms 23' größer Null beträgt.

Es ist gemäß einer weiteren Ausführungsform jedoch auch denkbar, dass der zweite Abstand 17 in seiner Länge veränderbar sein kann, entsprechend dem ersten Abstand. Die zweite Zugfeder 11' stellt also in diesem Zusammenhang für die Federungsvorrichtung 1 ein Mindestdrehmoment bereit, wohingegen das durch den ersten Hebelarm 23 erzeugte erste Drehmoment 25 von der Länge des ersten Hebelarms 23 abhängt.

Allgemein ist das erzeugte erste Drehmoment 25 umso höher, je länger der erste Hebelarm 23 ausgebildet ist. Die Länge des ersten Hebelarms 23 ist mittels der Einstellvorrichtung 14 (hier nicht gezeigt) stufenlos einstellbar, insbesondere kann die Länge Null oder annähernd Null betragen, wenn sich der erste Endbereich 12 auf einer Linie mit der dritten Schwenkachse 9 befindet. Beträgt die Länge des ersten Hebelarms 23 Null oder annähernd Null, so wird hierbei kein oder nur ein vernachlässigbares erstes Drehmoment 25 erzeugt. Diese Einstellung der ersten Zugfeder entspricht hierbei einer Konfiguration eines leichten Fahrers, da kein so großes Drehmoment 24 zum Rückstellen benötigt wird.

Der erste Endbereich 12 der ersten Zugfeder 11 ist hierbei vorzugsweise stufenlos veränderbar, so dass die Länge des ersten Hebelarms 23 Werte zwischen Null bzw. annähernd Null und der Länge des zweiten Hebelarms 23' annehmen kann. Je länger der erste Hebelarm 23 ausgebildet ist, desto höher ist das erzeugte erste Drehmoment 25. Entspricht die Länge des ersten Hebelarms 23 der Länge des zweiten Hebelarms 23', ist das erzeugte Drehmoment 24 maximal. Es ist auch denkbar, dass der erste Hebelarm 23 länger als der zweite Hebelarm 23' ist, wodurch ein noch größeres erstes Drehmoment 25 erzeugt werden kann. Insgesamt ist die Länge des ersten Hebelarms 23 begrenzt durch eine minimale Höhe der Federung bzw. der Federungsvorrichtung. Die minimale Höhe ist gegeben in dem vollständig eingefederten Zustand.

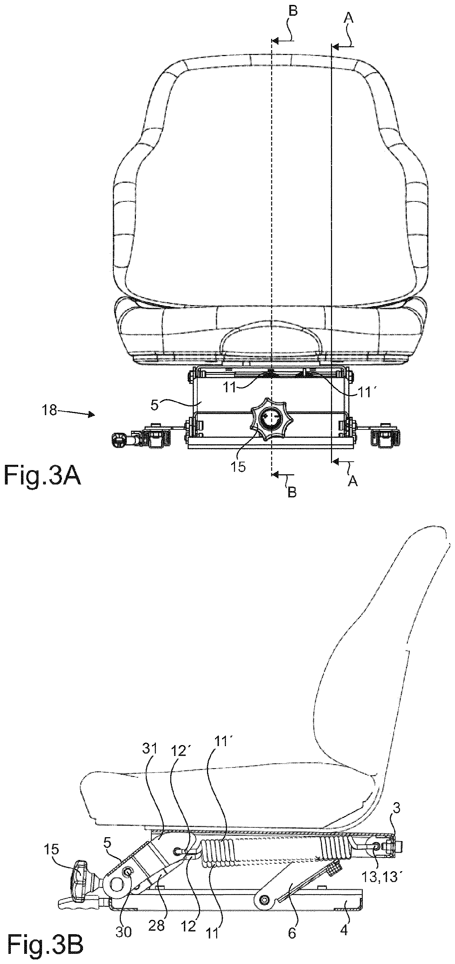

In der Figur 3A ist der Fahrzeugsitz 2 der Figur 1 in einer Vorderansicht dargestellt, wohingegen in der Figur 3B der Fahrzeugsitz 2 in einer Schnittansicht entlang der Schnittebene A-A gezeigt ist.

Wie insbesondere in der Figur 3B zu erkennen ist, ist der erste Endbereich 12' der zweiten Zugfeder 11' mit der ersten Verbindungsschwinge 5 mittels eines ersten Trägerelements 31 der Einstellvorrichtung 14 verbunden, wobei das erste Trägerelement 31 starr mit der ersten Verbindungsschwinge 5 verbunden ist. Die erste Zugfeder 11 ist mittels eines Einstellelements 28 drehbar um eine zweite Drehachse 30 mit dem ersten Trägerelement 31 verbunden. Die zweiten Endbereiche 13, 13' der Zugfedern 11, 11' sind hierbei mit dem Federungsoberteil 3 verbunden.

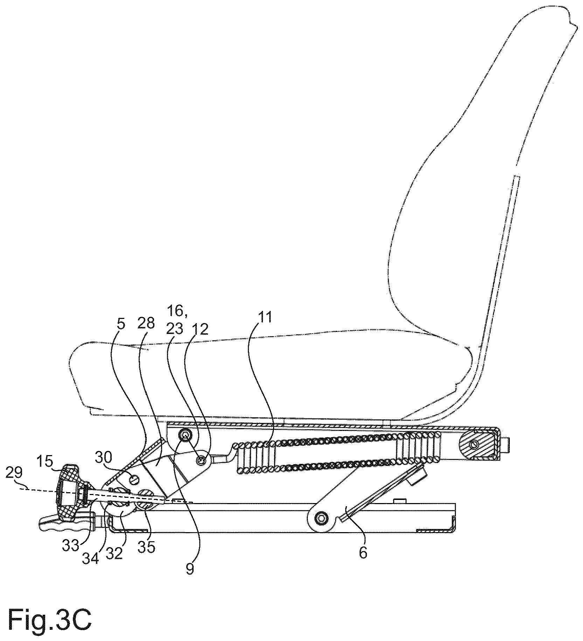

Eine genauere Darstellung des Einstellelements 28 ist der Figur 3C zu entnehmen, welcher einem Schnitt entlang der Ebene B-B entspricht.

Mit dem Betätigungshebel 15 ist ein Spindelelement 33 verbunden, welches um eine erste Drehachse 29 drehbar ist und mit einem ersten Spindellager 34 und einem zweiten Spindellager 35 verbunden ist. Das erste Spindellager 34 ist hierbei ortsfest an dem ersten Trägerelement 31 (hier nicht gezeigt) angeordnet. Das zweite Spindellager 35 ist hierbei ortsfest bis auf mögliche Drehungen an dem Einstellelement 28 angeordnet.

Durch Drehung des Betätigungshebels 15, resultierend in einer Drehung des Spindelelements 33 um die erste Drehachse 29, wird das zweite Spindellager 35 entlang der ersten Drehachse 29 bewegt und dreht entsprechend das Einstellelement 28 um die zweite Drehachse 30, was einer Veränderung des ersten Abstandes 16 bzw. des ersten Hebelarms 23 entspricht.

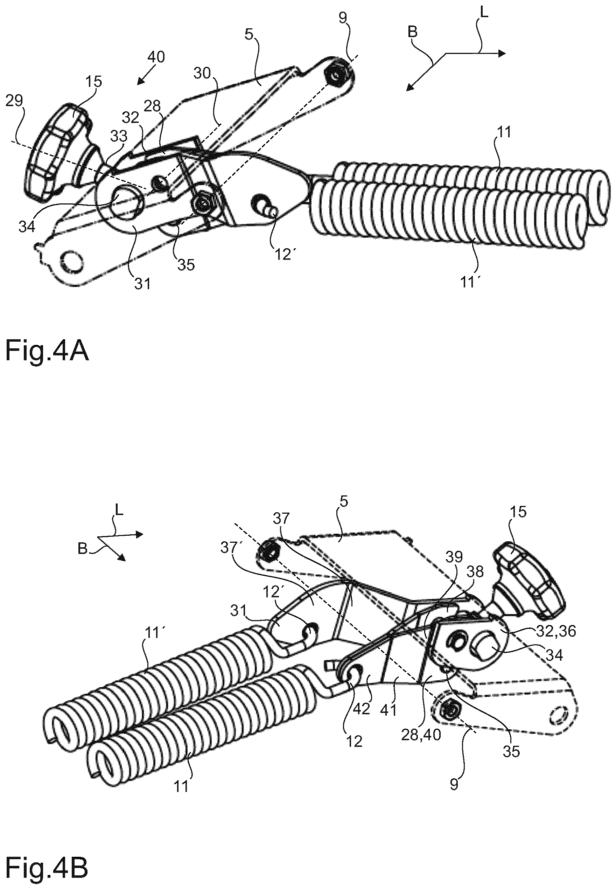

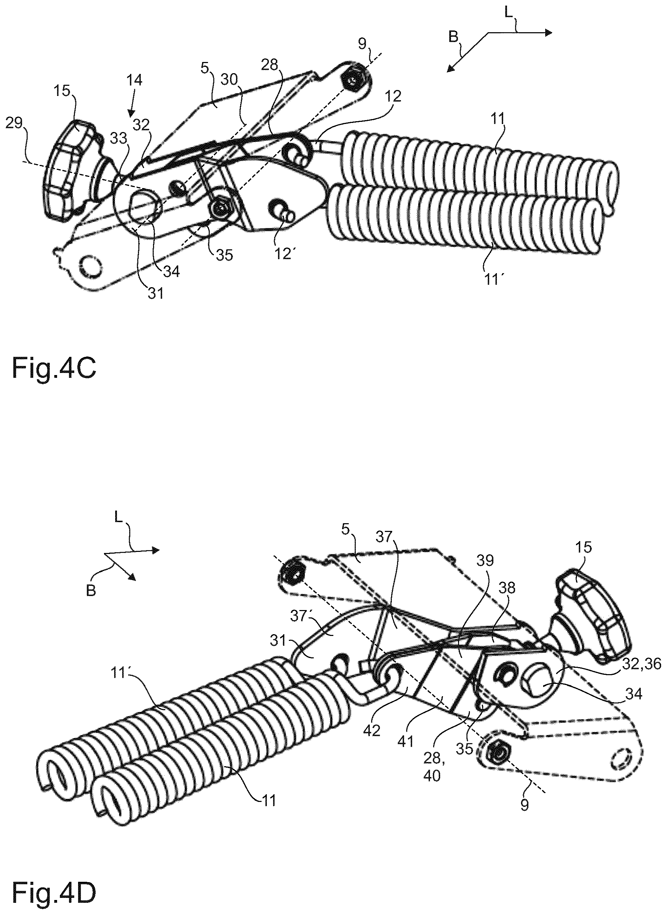

In den Figuren 4A, 4B, 4C und 4D wird die Einstellvorrichtung 14 noch einmal genauer dargestellt, wobei die Figuren 4A und 4B einer Einstellung für einen schweren Fahrer und die Figuren 4C und 4D einer Einstellung für einen leichten Fahrer entsprechen. Der Gegenstand der Figur 4B entspricht dem der Figur 4A und der Gegenstand der Figur 4D entspricht dem der Figur 4C, wobei jeweils eine andere perspektivische Ansicht dargestellt ist.

Wie zu erkennen ist, ist die Einstellvorrichtung 14 durch das erste 31 und zweite Trägerelement 32 starr mit der ersten Verbindungsschwinge 5 verbunden. Weiter ist ein erste Spindellager einerseits sowohl mit dem ersten 31 als auch dem zweiten Trägerelement 32 ortsfest verbunden und andererseits mit einem Spindelelement 33 verbunden, wobei das Spindelelement drehbar um die erste Drehachse 29 gelagert ist. Durch Drehung des Spindelelements 33 um die erste Drehachse 29 wird, wie bereits beschrieben, das zweite Spindellager 35 entlang der ersten Drehachse 29 bewegt, was zu einer Drehung des Einstellelements 28 um die zweite Drehachse 30 führt. Hierdurch wird die Position des ersten Endbereichs 12 der ersten Zugfeder 11 verändert, was wiederum einer Änderung des ersten Abstandes 16 bzw. des ersten Hebelarms 23 entspricht.

Wie weiter zu erkennen ist, sind das erste 31 und zweite Trägerelement 32 unterschiedlich ausgebildet. Vorteilhaft weisen jedoch die Trägerelemente 31, 32 einen identischen Abschnitt 36 auf, welcher im Wesentlichen dem zweiten Trägerelement 32 entspricht.

Das erste Trägerelement 31 weist aber darüber hinaus noch einen Zwischenabschnitt 37 und einen Endabschnitt 38 auf. Der Endabschnitt 38 verläuft parallel zu dem identischen Abschnitt 36, ist jedoch in Breitenrichtung B gegenüber dem Abschnitt 36 verschoben, wobei zwischen dem Abschnitt 36 und dem Endabschnitt 38 der Zwischenabschnitt 37 angeordnet ist. Der Zwischenabschnitt 37 verläuft sowohl in Breitenrichtung B als auch in Längsrichtung L. Durch eine derartige Anordnung bzw. Ausgestaltung des ersten Trägerelements 31 ist es möglich, die ersten Endbereich 12, 12' voneinander in Breitenrichtung B zu beabstanden, so dass bei einer Einstellung des ersten Abstandes 16 (hier nicht gezeigt) keine Verhakungen oder Behinderungen der Zugfedern 11, 11' zueinander bzw. gegeneinander auftreten.

Weiter ist den Figuren 4A-4D zu entnehmen, dass das Einstellelement 28 verschiedene Abschnitte 40, 41, 42 aufweist. Insbesondere sind ein erstes Einstellelementteil 38 und ein zweites Einstellelementteil 39 zu erkennen, welche in einem ersten Abschnitt 40 in Breitenrichtung B voneinander beabstandet sind. In einem zweiten Abschnitt 41 verringert sich die Beabstandung in Breitenrichtung der Einstellelementteile 38, 39 in Längsrichtung L gesehen stetig, wohingegen die Einstellelementteile 38, 39 in einem dritten Abschnitt 42 miteinander verbunden sind.

Wie insbesondere der Figur 4B zu entnehmen ist, ist der erste Endbereich 12 der ersten Zugfeder 11 annähernd auf der dritten Schwenkachse 9 angeordnet, so dass der erste Hebelarm 23 (hier nicht gezeigt) annähernd eine Länge von Null aufweist, wodurch kein nennenswertes erstes Drehmoment 25 durch die erste Zugfeder 11 erzeugt wird.

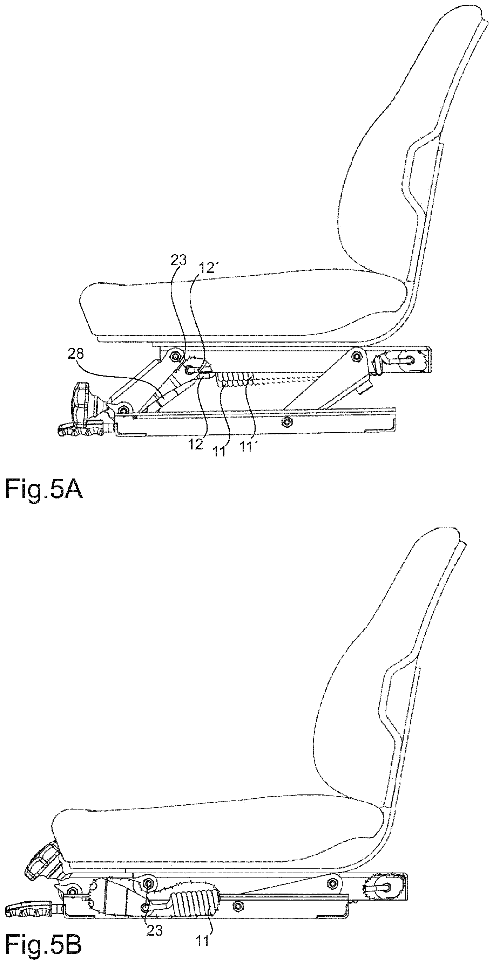

Die Figuren 5A-5D zeigen dabei einen Fahrzeugsitz 2 mit einer Einstellvorrichtung 14 gemäß den Figuren 4A und 4B in einer oberen und einer unteren Endlage.

Die Figuren 5A und 5B entsprechen einer Einstellung der Einstellvorrichtung 14 für einen schweren Fahrer, wie gemäß Figur 4A gezeigt, wobei die Figur 5A einer oberen Endlage und die Figur 5B einer unteren Endlage entspricht.

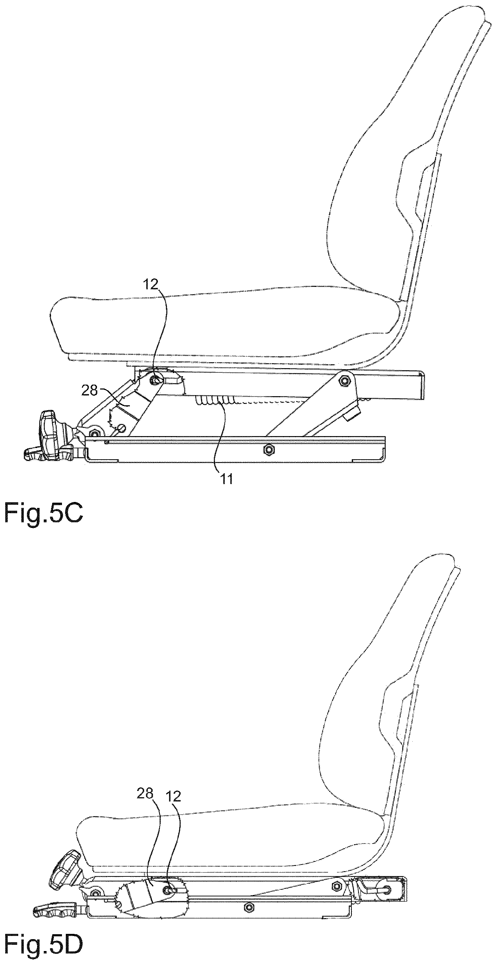

Die Figuren 5C und 5D entsprechen einer Einstellung der Einstellvorrichtung 14 für einen leichten Fahrer, wie gemäß Figur 4B gezeigt, wobei die Figur 5C einer oberen Endlage und die Figur 5D einer unteren Endlage entspricht.

Insbesondere aus einem Vergleich der Figuren 5A und 5C ist der Längenunterschied des ersten Hebelarms 23 deutlich zu erkennen. Die Länge des ersten Hebelarms 23 in der Figur 5C entspricht annähernd Null, so dass die erste Zugfeder 11 hierbei im Wesentlichen parallel zu dem Federungsoberteil 3 angeordnet ist.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Federungsvorrichtung
- 2: Fahrzeugsitz
- 3: Federungsoberteil
- 4: Federungsunterteil
- 5: erste Verbindungsschwinge
- 6: zweite Verbindungsschwinge
- 7: erste Schwenkachse
- 8: zweite Schwenkachse
- 9: dritte Schwenkachse
- 10: vierte Schwenkachse
- 11: erste Zugfeder
- 11': zweite Zugfeder
- 12: erster Endbereich der ersten Zugfeder
- 12': erster Endbereich der zweiten Zugfeder
- 13: zweiter Endbereich der ersten Zugfeder
- 13': zweiter Endbereich der zweiten Zugfeder
- 14: Einstellvorrichtung
- 15: Betätigungshebel
- 16: erster Abstand
- 17: zweiter Abstand
- 18: Längsverstelleinrichtung
- 19: Rückenlehne
- 20: Sitzfläche
- 21: Sitzschale
- 22: sich nach oben erstreckender Anteil
- 23: erster Hebelarm
- 23': zweiter Hebelarm
- 24: Drehmoment
- 25: erstes Drehmoment
- 26: zweites Drehmoment
- 27: Drehachse Betätigungselement
- 28: Einstellelement
- 29: erste Drehachse
- 30: zweite Drehachse
- 31: erstes Trägerelement
- 32: zweites Trägerelement
- 33: Spindelelement
- 34: erstes Spindellager
- 35: zweites Spindellager
- 36: identischer Abschnitt
- 37: Zwischenabschnitt
- 37': Endabschnitt
- 38: erstes Einstellelementteil
- 39: zweites Einstellelementteil
- 40: erster Abschnitt
- 41: zweiter Abschnitt
- 42: zweiter Abschnitt
- F: resultierende Kraft
- H: Höhenrichtung
- L: Längsrichtung
- B: Breitenrichtung

## Patentansprüche

1. Federungsvorrichtung (1) für einen Fahrzeugsitz (2), umfassend ein Federungsoberteil (3) und ein Federungsunterteil (4), welche durch eine erste Verbindungsschwinge (5) und eine zweite Verbindungsschwinge (6) miteinander verbunden sind und die erste Verbindungsschwinge (5) schwenkbar um eine erste Schwenkachse (7) und die zweite Verbindungsschwinge (6) schwenkbar um eine zweite Schwenkachse (8) an dem Federungsunterteil (4) angeordnet sind, wobei eine erste Zugfeder (11) und eine zweite Zugfeder (11') jeweils mit einem ersten Endbereich (12, 12') mit der ersten Verbindungsschwinge (5) und mit einem zweiten Endbereich (13, 13') mit dem Federungsoberteil (3) oder dem Federungsunterteil (4) verbunden ist, wobei
der erste Endbereich (12) der ersten Zugfeder (11) in einem ersten Abstand (16) und der erste Endbereich (12') der zweiten Zugfeder (11') in einem zweiten Abstand (17) zu der ersten Verbindungsschwinge (5) daran befestigt sind, wobei der erste Abstand (16) mittels einer Einstelleinrichtung (14), welche ein erstes (31) und ein zweites Trägerelement (32) umfasst, mittels des ersten (31) und des zweiten Trägerelements (32) starr mit der ersten Verbindungsschwinge (5) und mit dem ersten Endbereich (12) der ersten Zugfeder (11) verbunden ist, in seiner Länge veränderbar ist,
**dadurch gekennzeichnet, dass**
der zweite Abstand (17) des ersten Endbereichs (12') der zweiten Zugfeder (11') zu der ersten Verbindungsschwinge (5) konstant ist und wobei die erste Zugfeder (11) mittels eines Einstellelements (28) drehbar um eine zweite Drehachse (30) mit dem ersten Trägerelement (31) verbunden ist.

2. Federungsvorrichtung (1) nach Anspruch 1,
**dadurch gekennzeichnet, dass**
die Einstellvorrichtung (14) ein um eine erste Drehachse (29) drehbares Spindelelement (33), welches mit einem ersten Spindellager (34) und einem zweiten Spindellager (35) verbunden ist, umfasst, wobei das erste Spindellager (34) ortsfest mit dem ersten (31) und dem zweiten Trägerelement (32) und das zweite Spindellager (35) mit dem um die zweite Drehachse (30) drehbaren Einstellelement (28) verbunden sind, wobei die zweite Drehachse (30) an dem ersten (31) und dem zweiten Trägerelement (32) drehbar gelagert ist und wobei der erste Endbereich (12) der ersten Zugfeder (11) mit dem Einstellelement (28) und der erste Endbereich (12') der zweiten Zugfeder (11') mit dem ersten Trägerelement (31) verbunden sind.

3. Federungsvorrichtung (1) nach Anspruch 2,
**dadurch gekennzeichnet, dass**
die Einstellvorrichtung (14) mittels eines Betätigungshebels (15), welcher mit dem Spindelelement (33) verbunden ist, durch Drehung des Betätigungshebels (15) um die erste Drehachse (29) betätigbar ist, wodurch das Einstellelement (28) um die zweite Drehachse (30) drehbar ist.

4. Federungsvorrichtung (1) nach einem der Ansprüche 1 bis 3,
**dadurch gekennzeichnet, dass**
die Einstellvorrichtung (14) mittels eines Motors betriebenen Betätigungselements (15), welches mit dem Spindelelement (33) verbunden ist, betätigbar ist durch Drehung des Spindelelements (33) um die erste Drehachse (29), wodurch das Einstellelement (28) um die zweite Drehachse (30) drehbar ist.

## Claims

1. Suspension device (1) for a vehicle seat (2), comprising an upper suspension portion (3) and a lower suspension portion (4), said suspension portions being connected to one another by a first swivel connector (5) and a second swivel connector (6), said first swivel connector (5) being arranged on the lower suspension portion (4) in such a way that it can swivel about a first swivel pin (7), and the second swivel connector (6) being arranged on the lower suspension portion in such a way that it can swivel about a second swivel pin (8), a first tension spring (11) and a second tension spring (11') being respectively connected to the first swivel connector (5) by means of a first end region (12, 12') and to the upper suspension portion (3) or the lower suspension portion (4) by means of a second end region (13, 13'), wherein
the first end region (12) of the first tension spring (11) is attached to the first swivel connector (5) at a first distance (16), and the first end region (12') of the second tension spring (11') is attached to said first swivel connector (5) at a second distance (17), the length of the first distance (16) being variable by means of an adjustment device (14), which comprises a first (31) and a second support element (32), by means of the first (31) and the second support element (32) rigidly connected to the first swivel connector (5) and to the first end region (12) of the first tension spring (11),
**characterised in that**
the second distance (17) of the first end region (12') of the second tension spring (11') to the first swivel connector (5) is constant and the first tension spring (11) being connected to the first support element (31) by means of an adjustment member (28) in such a way that it can be rotated about a second axis of rotation (30).

2. Suspension device (1) according to claim 1,
**characterised in that**
the adjustment device (14) comprises a spindle element (33) that can be rotated about a first axis of rotation (29), said spindle element being connected to a first spindle bearing (34) and a second spindle bearing (35), said first spindle bearing (34) being connected in a stationary manner to the first (31) and second support element (32), and said second spindle bearing (35) being connected to the adjustment member (28) that can be rotated about the second axis of rotation (30), said second axis of rotation (30) being mounted in such a way that it can rotate on the first (31) and second support element (32), and the first end region (12) of the first tension spring (11) being connected to the adjustment member (28), and the first end region (12') of the second tension spring (11') being connected to the first support element (31).

3. Suspension device (1) according to claim 2,
**characterised in that**
the adjustment device (14) can be actuated by means of an actuating lever (15), which is connected to the spindle element (33) by rotating the actuating lever (15) about the first axis of rotation (29), as a result of which the adjustment member (28) can be rotated about the second axis of rotation (30)

4. Suspension device (1) according to any of claims 1 to 3,
**characterised in that**
the adjustment device (14) can be actuated by means of an actuating member (15) driven by a motor, said actuating member being connected to the spindle element (33), by rotating the spindle element (33) about the first axis of rotation (29), as a result of which the adjustment member (28) can be rotated about the second axis of rotation (30).

## Revendications

1. Dispositif de suspension (1) pour un siège de véhicule (2), comportant une partie supérieure de suspension (3) et une partie inférieure de suspension (4), lesquelles sont reliées l'une à l'autre par un premier élément oscillant de liaison (5) et un second élément oscillant de liaison (6) et le premier élément oscillant de liaison (5) est disposé sur la partie inférieure de suspension (4) apte à pivoter autour d'un premier axe de pivotement (7) et le second élément oscillant de liaison (6) est disposé sur la partie inférieure de suspension (4) apte à pivoter autour d'un second axe de pivotement (8), dans lequel un premier ressort de traction (11) et un second ressort de traction (11') sont respectivement reliés au premier élément oscillant de liaison (5) par une première région d'extrémité (12, 12') et à la partie supérieure de suspension (3) ou à la partie inférieure de suspension (4) par une seconde région d'extrémité (13, 13'), dans lequel
la première région d'extrémité (12) du premier ressort de traction (11) est fixée au premier élément oscillant de liaison (5) à une première distance (16) et la première région d'extrémité (12') du second ressort de traction (11') est fixée au premier élément oscillant de liaison (5) à une seconde distance (17), dans lequel la première distance (16) est apte à êre modifiée dans sa longueur au moyen d'un dispositif de réglage (14), lequel comporte un premier (31) et un second (32) élément support et qui est relié rigidement au moyen du premier (31) et du second (32) élément support au premier élément oscillant de liaison (5) et à la première région d'extrémité (12) du premier ressort de traction (11),
**caractérisé par le fait que**
la seconde distance (17) de la première région d'extrémité (12') du second ressort de traction (11') au premier élément oscillant de liaison (5) est constante et dans lequel le premier ressort de traction (11) est relié au premier élément support (31) apte à tourner autour d'un second axe de rotation (30) au moyen d'un élément de réglage (28).

2. Dispositif de suspension (1) selon la revendication 1,
**caractérisé par le fait que**
le dispositif de réglage (14) comporte un élément broche (33) qui est apte à tourner autour d'un premier axe de rotation (29) et qui est relié à un premier palier de broche (34) et à un second palier de broche (35), dans lequel le premier palier de broche (34) est relié de manière fixe au premier (31) et au second (32) élément support et le second palier de broche (35) est relié à l'élément de réglage (28) apte à tourner autour du second axe de rotation (30), dans lequel le second axe de rotation (30) est monté à rotation sur le premier (31) et le second (32) élément support, et dans lequel la première région d'extrémité (12) du premier ressort de traction (11) est reliée à l'élément de réglage (28) et la première région d'extrémité (12') du second ressort de traction (11') est reliée au premier élément support (31).

3. Dispositif de suspension (1) selon la revendication 2,
**caractérisé par le fait que**
le dispositif de réglage (14) est actionnable au moyen d'un levier d'actionnement (15), lequel est relié à l'élément broche (33), par rotation du levier d'actionnement (15) autour du premier axe de rotation (29), ce par quoi l'élément de réglage (28) est apte à tourner autour du second axe de rotation (30).

4. Dispositif de suspension (1) selon l'une des revendications 1 à 3,
**caractérisé par le fait que**
le dispositif de réglage (14) est actionnable au moyen d'un élément d'actionnement (15) entraîné par un moteur, lequel élément d'actionnement (15) est relié à l'élément broche (33), par rotation de l'élément broche (33) autour du premier axe de rotation (29), ce par quoi l'élément de réglage (28) est apte à tourner autour du second axe de rotation (30).
